(19) **Europäisches Patentamt**
**European Patent Office**
**Office européen des brevets**

(11) **EP 4 746 493 A1**

(12) **EUROPEAN PATENT APPLICATION**
published in accordance with Art. 153(4) EPC

(43) Date of publication:
**20.05.2026  Bulletin 2026/21**

(21) Application number: **24858353.6**

(22) Date of filing: **19.08.2024**

(51) International Patent Classification (IPC):
**H04W 24/02** (2009.01)

(52) Cooperative Patent Classification (CPC):
**H04W 24/02; H04W 36/00; H04W 36/08;**
**H04W 36/30; H04W 56/00**

(86) International application number:
**PCT/CN2024/113002**

(87) International publication number:
**WO 2025/044810 (06.03.2025 Gazette 2025/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.08.2023  CN 202311086713**

(71) Applicant: **Huawei Technologies Co., Ltd.**
**Shenzhen, Guangdong 518129 (CN)**

(72) Inventors:
 • **HUANG, Xiuxian**
 **Shenzhen, Guangdong 518129 (CN)**

 • **LI, Xinxian**
 **Shenzhen, Guangdong 518129 (CN)**
 • **DING, Mengying**
 **Shenzhen, Guangdong 518129 (CN)**
 • **PENG, Jinlin**
 **Shenzhen, Guangdong 518129 (CN)**
 • **LONG, Yi**
 **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SECONDARY CELL ACTIVATION METHOD AND COMMUNICATION APPARATUS**

(57)    This application provides a secondary cell activation method and a communication apparatus. The method includes: A terminal device receives first information from a network device, where the first information indicates a start location of a 1st reference signal burst of a secondary cell in a frame in which the 1st reference signal burst is located and an interval between two adjacent reference signal bursts; and the terminal device receives a reference signal burst #i of the secondary cell, determines an index value of the reference signal burst #i based on a receive time of the reference signal burst #i and the interval between two adjacent reference signal bursts, and performs cell search based on the index value of the reference signal burst #i, the start location of the 1st reference signal burst in the frame in which the 1st reference signal burst is located, and the interval between two adjacent reference signal bursts. According to the method, a reference signal burst periodicity is determined based on the interval between reference signal bursts indicated by the first information. This helps improve flexibility of the reference signal burst periodicity, and shorten a delay of activating the secondary cell by the terminal device.

FIG. 4

## Description

This application claims priority to Chinese Patent Application No. 202311086713.X, filed with the China National Intellectual Property Administration on August 26, 2023 and entitled "SECONDARY CELL ACTIVATION METHOD AND COMMUNICATION APPARATUS", which is incorporated herein by reference in its entirety.

## TECHNICAL FIELD

This application relates to the communication field, and in particular, to a secondary cell activation method and a communication apparatus.

## BACKGROUND

After a secondary cell (secondary cell, SCell) is configured, a terminal device needs to first activate the SCell based on an indication of a network device, and then perform signal transmission by using a resource of the secondary cell. A process of activating the SCell includes a process of determining a transmit/receive beam pair for communication between the terminal device and the SCell, and the process is performed based on a synchronization signal and physical broadcast channel block (synchronization signal and physical broadcast channel block, SSB). In the process, the terminal device needs to perform automatic gain control settling (automatic gain control settling, AGC settling) twice, cell search (cell search) once, and layer 1 reference signal received power measurement (layer 1 reference signal received power measurement, L1-RSRP measurement) once in each receive beam direction.

Generally, in the activation process, an SSB sending periodicity is 20 ms, and in each SSB sending periodicity, the terminal device may perform AGC settling twice, cell search once, or L1-RSRP measurement once on one receive beam. In other words, when the terminal device has eight receive beams, 32 (that is, four times the quantity of receive beams) SSB periodicities, that is, 640 ms, are needed for the terminal device to perform AGC settling twice, cell search once, and L1-RSRP measurement once in the process of activating the SCell. It can be learned that a long delay is generated in the process of activating the SCell.

## SUMMARY

Embodiments of this application provide a secondary cell activation method and a communication apparatus, to help improve flexibility of a reference signal burst periodicity, and reduce a delay of activating a secondary cell by a terminal device.

According to a first aspect, this application provides a secondary cell activation method. An example in which a terminal device performs the method is used. The method includes: The terminal device receives first information from a network device, where the first information indicates a start location of a 1st reference signal burst of a secondary cell in a frame in which the 1st reference signal burst is located and an interval between two adjacent reference signal bursts; the terminal device receives a reference signal burst #i of the secondary cell, where the reference signal burst #i is one of reference signal bursts indicated by the first information, or the reference signal burst #i may be understood as one of reference signal bursts determined based on the first information; and further, the terminal device determines an index value of the reference signal burst #i based on a receive time of the reference signal burst #i and the interval between two adjacent reference signal bursts, and performs cell search based on the index value of the reference signal burst #i, the start location of the 1st reference signal burst in the frame in which the 1st reference signal burst is located, and the interval between two adjacent reference signal bursts.

In the method described in the first aspect, the first information indicates the interval between two adjacent reference signal bursts to affect a reference signal burst periodicity, thereby improving flexibility of the reference signal burst periodicity. Compared with a manner of activating the secondary cell by receiving an SSB at a fixed periodicity, a manner of activating the secondary cell by receiving the reference signal burst at a flexible periodicity (including a step of performing automatic gain control settling, cell search, or layer 1 reference signal received power measurement) helps reduce a delay of activating the secondary cell by the terminal device. In addition, in the solution provided in this application, the terminal device determines the index value of the reference signal burst based on the receive time of the reference signal burst, without adding frame indication information and the index value of the reference signal burst to the reference signal burst. This further helps reduce overheads in comparison with a structure in which the SSB includes a synchronization signal and a channel used to carry frame indication information and an index of the SSB.

In a possible implementation, the terminal device determines a plurality of time ranges based on a subcarrier spacing of the secondary cell, a receive time difference between a primary cell and the secondary cell, and the interval between two adjacent reference signal bursts, where different time ranges in the plurality of time ranges correspond to different index values; and further, the terminal device determines an index value corresponding to a time range #i as the index value of the reference signal burst #i, where the time range #i is a time range in which the receive time of the reference signal burst #i falls in the plurality of time ranges.

In a possible implementation, the interval between two adjacent reference signal bursts is greater than or equal to $2 \cdot \lceil \Delta T \cdot 14 \cdot 2^{\mu} \cdot 10^{-3} \rceil$, where

$\mu$ is an integer greater than or equal to -1, a relationship between $\mu$ and the subcarrier spacing SCS of the secondary cell satisfies SCS = 15kHz · $2^\mu$, and $\Delta T$ is the receive time difference between the primary cell and the secondary cell.

In a possible implementation, when a time-frequency resource of a physical downlink control channel PDCCH and a time-frequency resource of a reference signal burst #*j* overlap on a first symbol, the terminal device does not expect to receive the reference signal burst #*j* on the first symbol, where the reference signal burst #*j* is one of the reference signal bursts indicated by the first information; or when a time-frequency resource of a physical downlink shared channel PDSCH and the time-frequency resource of the reference signal burst #j overlap on a second symbol, the terminal device receives the reference signal burst #*j* on the second symbol; or when a time-frequency resource of a first reference signal and the time-frequency resource of the reference signal burst #*j* overlap on a third symbol, the terminal device receives the reference signal burst #*j* on the third symbol, where the first reference signal is a channel state information reference signal CSI-RS or a demodulation reference signal DMRS.

According to a second aspect, this application provides a secondary cell activation method. An example in which a network device performs the method is used. The method includes: The network device sends first information to a terminal device, where the first information indicates a start location of a $1^{st}$ reference signal burst of a secondary cell in a frame in which the $1^{st}$ reference signal burst is located and an interval between two adjacent reference signal bursts, where the interval between two adjacent reference signal bursts is greater than or equal to $2 \cdot \lceil \Delta T \cdot 14 \cdot 2^\mu \cdot 10^{-3} \rceil$, where $\mu$ is an integer greater than or equal to -1, a relationship between $\mu$ and a subcarrier spacing SCS of the secondary cell satisfies SCS = 15kHz · $2^\mu$, and $\Delta T$ is a receive time difference between a primary cell and the secondary cell; and the network device sends a reference signal burst of the secondary cell to the terminal device based on the start location of the $1^{st}$ reference signal burst in the frame in which the $1^{st}$ reference signal burst is located and the interval between two adjacent reference signal bursts, where the reference signal burst of the secondary cell includes the $1^{st}$ reference signal burst.

In the method described in the second aspect, the network device flexibly determines the interval between the reference signal bursts by using the subcarrier spacing of the secondary cell and the receive time difference between the primary cell and the secondary cell, thereby improving flexibility of the reference signal burst set. Compared with a manner of activating the secondary cell by receiving an SSB at a fixed periodicity, a manner of activating the secondary cell by receiving the reference signal burst at a flexible periodicity (including a step of performing automatic gain control settling, cell search, or layer 1 reference signal received power measurement) helps reduce a delay of activating the secondary cell by the terminal device. In addition, in the solution provided in this application, the index value of the reference signal burst may be determined based on the receive time of the reference signal burst, without adding frame indication information and the index value of the reference signal burst to the reference signal burst. This further helps reduce overheads in comparison with a structure in which the SSB includes a synchronization signal and a channel used to carry frame indication information and an index of the SSB.

In a possible implementation, when a time-frequency resource of a physical downlink control channel PDCCH and a time-frequency resource of a reference signal burst #*j* overlap on a first symbol, the network device sends the PDCCH on the first symbol, and does not send the reference signal burst #*j* on the first symbol, where the reference signal burst #*j* is one of reference signal bursts indicated by the first information; or when a time-frequency resource of a physical downlink shared channel PDSCH and the time-frequency resource of the reference signal burst #*j* overlap on a second symbol, the network device sends the reference signal burst #*j* on the second signal, and does not send the PDSCH on the second symbol; or when a time-frequency resource of a first reference signal and the time-frequency resource of the reference signal burst #*j* overlap on a third symbol, the network device sends the reference signal burst #*j* on the third symbol, and does not send the first reference signal on the third symbol, where the first reference signal is a channel state information reference signal CSI-RS or a demodulation reference signal DMRS.

According to a third aspect, this application provides a communication apparatus. The communication apparatus may be a terminal device, an apparatus in the terminal device, or an apparatus that can be used in combination with the terminal device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and the beneficial effects in the first aspect.

According to a fourth aspect, this application provides a communication apparatus. The communication apparatus may be a network device, an apparatus in the network device, or an apparatus that can be used in combination with the network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and the beneficial effects in the second aspect.

According to a fifth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to the first aspect or the method according to the second aspect through a logic circuit or by executing code instructions.

According to a sixth aspect, this application provides a computer-readable storage medium. The storage medium stores a computer program or instructions, and when the computer program or the instructions are executed by a communication apparatus, the method according to the first aspect or the method according to the second aspect is implemented.

According to a seventh aspect, this application provides a computer program product including instructions. When a communication apparatus reads and executes the instructions, the communication apparatus performs the method according to the first aspect or the method according to the second aspect.

According to an eighth aspect, this application provides a communication system, including a communication apparatus configured to perform the method according to the first aspect and a communication apparatus configured to perform the method performed by the network device described in the second aspect.

## BRIEF DESCRIPTION OF DRAWINGS

FIG. 1 is a diagram of a communication system according to an embodiment of this application;
FIG. 2 is a diagram of carrier aggregation according to an embodiment of this application;
FIG. 3 is a diagram of a beam management process according to an embodiment of this application;
FIG. 4 is a schematic flowchart of a secondary cell activation method according to an embodiment of this application;
FIG. 5 is a diagram of a reference signal burst pattern according to an embodiment of this application;
FIG. 6 is a diagram of another reference signal burst pattern according to an embodiment of this application;
FIG. 7 is a diagram of still another reference signal burst pattern according to an embodiment of this application;
FIG. 8 is a diagram of still another reference signal burst pattern according to an embodiment of this application;
FIG. 9 is a diagram of a correspondence between a time range and an index value according to an embodiment of this application;
FIG. 10 is a diagram of a structure of a communication apparatus according to an embodiment of this application; and
FIG. 11 is a diagram of a structure of another communication apparatus according to an embodiment of this application.

## DESCRIPTION OF EMBODIMENTS

To facilitate specific understanding of embodiments of this application, the following first describes a system architecture in embodiments of this application.

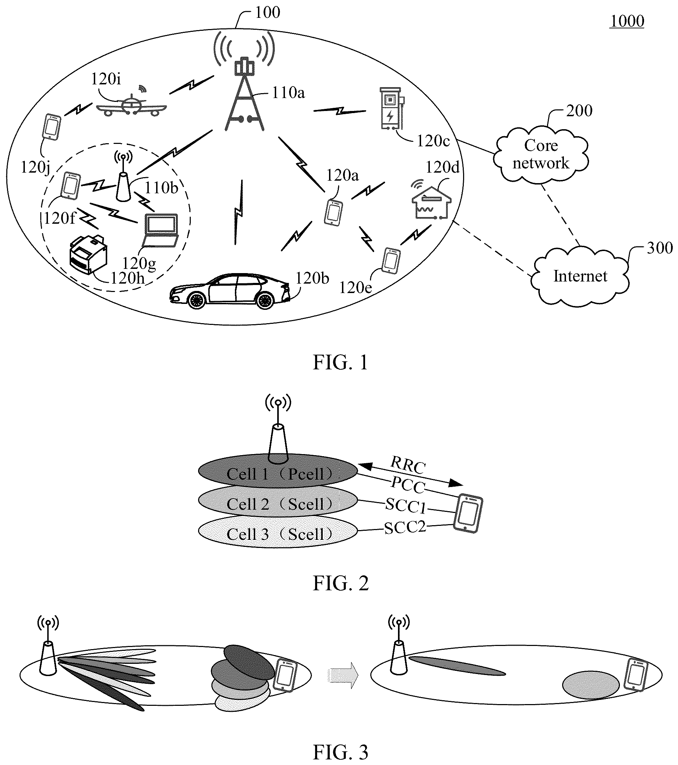

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner. It should be noted that the RAN node 110 may also be referred to as a network device 110 below.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help the terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to technical specifications related to the 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses the base station as an example of the RAN node for description.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or mobile. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, the base station and the terminal may be collectively referred to as a communication apparatus. 110a and 110b in FIG. 1 may be referred to as a communication apparatus having a function of a base station, and 120a to 120j in FIG. 1 may be referred to as a communication apparatus having a function of a terminal.

Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further susceptible to interference from a signal from a neighbor cell.

In embodiments of this application, a time domain symbol may be an orthogonal frequency division multiplexing (orthogonal frequency division multiplexing, OFDM) symbol, or may be a discrete Fourier transform-spread-OFDM (discrete Fourier transform-spread-OFDM, DFT-s-OFDM) symbol. Unless otherwise specified, all symbols in embodiments of this application are time domain symbols.

It may be understood that, in embodiments of this application, a PDSCH, a PDCCH, and a PUSCH are merely used as examples of a downlink data channel, a downlink control channel, and an uplink data channel. In different systems and different scenarios, a data channel and a control channel may have different names. This is not limited in embodiments of this application.

For ease of understanding of related content in embodiments of this application, the following further explains and describes some terms in embodiments of this application. This part is merely for ease of understanding, and cannot be considered as disclosure or specific limitation of the technical solutions of this application.

1. Beam

The beam may be represented by a spatial filter (spatial filter) or a spatial parameter (spatial parameter) in an NR protocol. A beam used to send a signal may be referred to as a transmit beam (transmit beam, Tx beam), or may be referred to as a spatial transmit filter or a spatial transmit parameter. A beam used to receive a signal may be referred to as a receive beam (reception beam, Rx beam), or may be referred to as a spatial receive filter or a spatial receive parameter.

The transmit beam may refer to signal strength distribution formed in different directions in space after a signal is transmitted through an antenna, and the receive beam may refer to signal strength distribution in different directions in space of a radio signal received from an antenna.

It should be understood that the foregoing listed representation of the beam in the NR protocol is merely an example, and shall not constitute any limitation on this application. This application does not exclude a possibility that other terms are defined in another protocol to indicate same or similar meanings.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like. Different beams may be considered as corresponding to different resources. Same information or different information may be sent through different beams.

Optionally, a plurality of beams having same or similar communication features are considered as one beam. One beam may include one or more antenna ports, configured to transmit data, control signaling, a sounding signal, and the like. The one or more antenna ports forming the beam may also be considered as one antenna port set.

2. Cell (cell)

The cell is a set of resources managed by a base station, including a frequency domain resource and a space domain resource. The frequency domain resource of the cell includes an uplink frequency domain resource and/or a downlink frequency domain resource; and the space domain resource of the cell may be a space domain resource corresponding to one beam or a group of beams, which may alternatively be understood as that one cell corresponds to one specific physical coverage area. In embodiments of this application, different cells may be managed by different base stations. For example, a cell #1 and a cell #2 may be managed by different base stations. In this case, it may be considered that the cell #1 and the cell #2 are not co-located. The cell #1 and the cell #2 may alternatively be managed by a same base station, and have a same baseband processing unit and/or a same radio frequency processing unit. This is not particularly limited in this application.

According to a frequency band range in which a cell falls (or understood as a frequency band range to which a cell corresponds), a cell in a range of 450 MHz to 6000 MHz may be referred to as a cell in frequency range (frequency range, FR) 1 or a low-frequency cell, and a cell in a range of 24250 MHz to 52600 MHz is referred to as a cell in FR2 or a high-frequency cell. It should be noted that there is a one-to-one correspondence between cells and carriers, and when there is no logical conflict, the cell and the carrier may be used interchangeably. In other words, the frequency band range in which the cell falls may be understood as a frequency band range in which a frequency of the carrier corresponding to the cell falls, or may be referred to as an operating frequency band of the cell, a frequency band in which the cell is located, or the like.

3. Carrier aggregation (carrier aggregation, CA)

Refer to FIG. 2. A CA technology is a technology in which two or more component carriers (component carrier, CC) are aggregated together to support a larger transmission bandwidth. In other words, the CA technology can implement frequency resource integration, to aggregate spectrum resources of a same frequency band or different frequency bands for use by a terminal device, thereby improving whole network resource utilization.

When the terminal device is configured with CA, the terminal device may have a plurality of serving cells, and the plurality of serving cells include one primary cell (primary cell, PCell) and at least one SCell. The PCell is a cell in which the terminal device and a network device perform initial connection establishment (connection establishment), or a cell in which the terminal device performs radio resource control (radio resource control, RRC) connection reestablishment. The PCell is responsible for radio resource control RRC communication with the terminal device, and a CC corresponding to the PCell is referred to as a primary component carrier (primary component carrier, PCC). The SCell is added, modified, or released by using an RRC connection reconfiguration message after an initial security activation procedure (initial security activation procedure). The SCell is used for providing an additional radio resource, and there is no RRC communication between the SCell and the terminal device.

4. SCell activation

An NR protocol defines two states of an SCell: an activated state and a deactivated state. When the SCell is in the activated state, and the SCell is configured with a physical downlink control channel (physical downlink control channel, PDCCH), a terminal device monitors the PDCCH of the SCell, and transmits a signal based on a network configuration and uplink or downlink scheduling information. When the SCell is in the deactivated state, the terminal device does not monitor or transmit any uplink or downlink signal in the SCell.

Generally, a network device provides a related configuration of the SCell for the terminal device by using RRC signaling, and indicates the terminal device to add the SCell. In this case, a default state of the SCell is the deactivated state. In other words, the SCell cannot be used immediately after being configured, but needs to be activated. After the SCell is added by the terminal device, the following three processes are mainly included:

4.1 Process of receiving an activation command

Specifically, the network device sends the activation command to the terminal device by using a medium access control control element (medium access control control element, MAC CE), and the terminal device sends HARQ feedback information to the network device, where the HARQ feedback information indicates whether the activation command is successfully received.

4.2 Process of activating an SCell in FR2

Specifically, when the network device receives the HARQ feedback information from the terminal device, and the HARQ feedback information indicates that the activation command is successfully received, the terminal device and the network device perform beam alignment. As shown in FIG. 3, the process of activating the SCell in FR2 may be understood as a process of performing coarse beam alignment based on an SSB, and determining a transmit beam of the network device and a receive beam of the terminal device. Specifically, the network device sends SSBs to the terminal device in a plurality of transmit beam directions, and the terminal device receives the SSBs from the network device in a plurality of receive beam directions. The terminal device performs AGC settling, cell search, and L1-RSRP measurement based on the received SSBs. The AGC settling is used for determining transmit power of the transmit beam. The cell search is used for detecting the SSBs to obtain synchronization information, to determine a frame boundary. The L1-RSRP measurement is used for determining a transmit beam range and a receive beam range. It should be noted that the terminal device usually needs to perform AGC settling twice, cell search once, and L1-RSRP measurement once in each receive beam direction.

4.3 Process of measuring a channel state information reference signal (channel state information reference signal, CSI-RS)

Specifically, the network device sends the CSI-RS to the terminal device by using the SCell; the terminal device receives the CSI-RS and measures the CSI-RS to obtain a CSI report; and the terminal device sends the CSI report to the network device. It should be understood that, when the network device receives a valid CSI report of the SCell from the terminal device, it is considered that the process of activating the SCell ends.

It can be learned that a delay generated in the process of activating the SCell in FR2 may include delays in the following three parts: a delay generated in the process of receiving the activation command, which is referred to as $T_{HARQ}$; a delay generated in the activation process, which is referred to as $T_{activation\_time}$; and a delay generated in the process of measuring the CSI-RS, which is referred to as $T_{CSI\_Reporting}$.

To shorten the delay of activating the SCell, this application provides a reference signal burst (burst) and a secondary cell activation method based on the reference signal burst. The following first describes the reference signal burst.

The reference signal burst mentioned in this application includes a signal used for synchronization. A specific name of the reference signal burst is not limited in this application. The signal used for synchronization includes a primary synchronization signal (primary synchronization signal, PSS) and/or a secondary synchronization signal (secondary synchronization signal, SSS). Alternatively, the signal used for synchronization is a signal generated based on an m-sequence. For example, the signal used for synchronization is a CSI-RS.

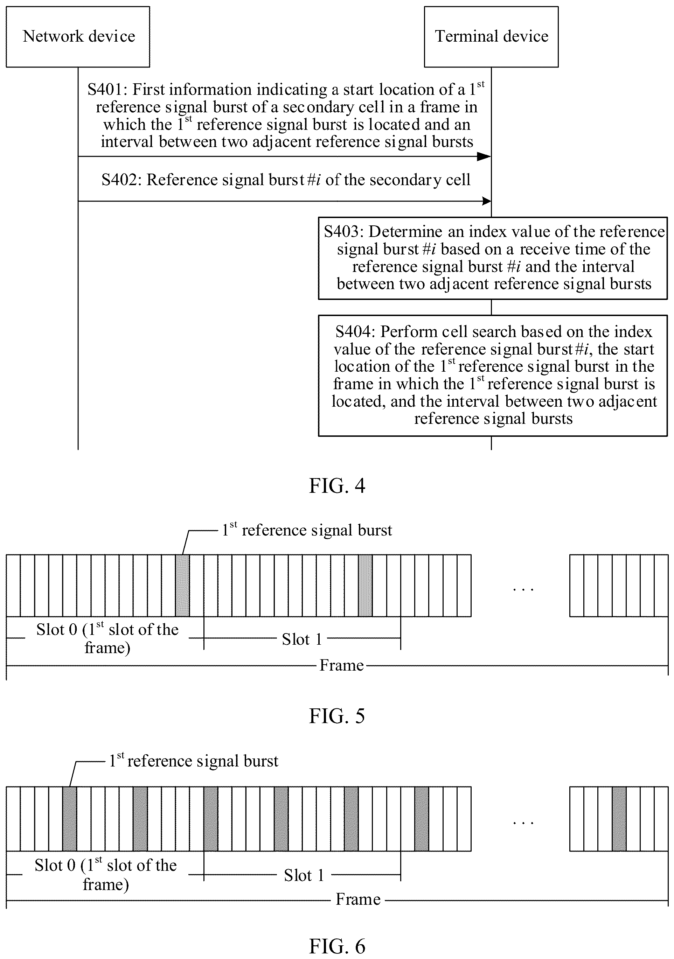

Based on the foregoing reference signal burst, the following describes in detail the secondary cell activation method and a communication apparatus provided in embodiments of this application with reference to the accompanying drawings. FIG. 4 is a schematic flowchart of a secondary cell activation method according to an embodiment of this application. As shown in FIG. 4, the secondary cell activation method includes step S401 to step S404. An example in which the method shown in FIG. 4 is performed by a terminal device and a network device is used for description. It may be understood that the method shown in FIG. 4 may alternatively be performed by a module (for example, a chip) in the terminal device and a module (for example, a chip, a CU, or a DU) in the network device.

S401: The network device sends first information to the terminal device, where the first information indicates a start location of a $1^{st}$ reference signal burst of a secondary cell in a frame in which the $1^{st}$ reference signal burst is located and an interval between two adjacent reference signal bursts. Correspondingly, the terminal device receives the first information from the network device.

Before the network device sends, to the terminal device, an activation command used to activate the secondary cell, the network device sends RRC signaling to the terminal device by using an RRC connection between a primary cell and the terminal device, where the RRC signaling carries the first information.

It should be understood that the interval between two adjacent reference signal bursts may be understood as a time unit between an end moment of the former reference signal burst and a start moment of the latter reference signal burst in the two adjacent reference signal bursts. The time unit includes but is not limited to a slot, a symbol, or the like.

In a possible implementation, the interval between two adjacent reference signal bursts is determined based on a subcarrier spacing (subcarrier spacing, SCS) of the secondary cell and a receive time difference between the primary cell and the secondary cell. For example, the interval X between two adjacent reference signal bursts satisfies a condition shown in formula (1).

$$X \geq 2 \cdot \lceil \Delta T \cdot 14 \cdot 2^{\mu} \cdot 10^{-3} \rceil \quad (1)$$

$\mu$ is an integer greater than or equal to -1, a relationship between $\mu$ and the SCS of the secondary cell satisfies SCS = 15kHz $\cdot$ $2^{\mu}$, and $\Delta T$ is the receive time difference between the primary cell and the secondary cell. It should be noted that the receive time difference between the primary cell and the secondary cell mentioned in this application may also be referred to as a frame timing difference between the primary cell and the secondary cell, that is, a timing offset between frames with a same frame number in the primary cell and the secondary cell.

For example, with the receive time difference between the primary cell and the secondary cell being 25 $\mu$s, when the SCS of the secondary cell is 60 kHz, the first information may indicate that the interval between two adjacent reference signal bursts is four symbols; or when the SCS of the secondary cell is 120 kHz, the first information may indicate that the interval between two adjacent reference signal bursts is six symbols; or when the SCS of the secondary cell is 240 kHz, the first information may indicate that the interval between two adjacent reference signal bursts is 12 symbols.

It should be further understood that the start location of the $1^{st}$ reference signal burst of the secondary cell in the frame in which the $1^{st}$ reference signal burst is located includes the following aspects: ① A relative location of a slot in which the $1^{st}$ reference signal burst is located in a corresponding frame (or understood as a frame in which the $1^{st}$ reference signal burst is located), which may be understood as indicating a specific slot in which the $1^{st}$ reference signal burst is located in the frame in which the $1^{st}$ reference signal burst is located. The relative location of the slot in which the $1^{st}$ reference signal burst is located in the corresponding frame may be indicated by the first information, or may be predefined in a communication protocol. This is not specifically limited in this application. ② A symbol location of the $1^{st}$ reference signal burst in the slot in which the $1^{st}$ reference signal burst is located, which may be understood as indicating a specific symbol in which the $1^{st}$ reference signal burst is located in the slot. The symbol location of the $1^{st}$ reference signal burst in the slot in which the $1^{st}$ reference signal burst is located may be indicated by the first information, or may be determined by the terminal device based on the interval between two adjacent reference signal bursts, or may be predefined in a communication protocol. This is not specifically limited in this application.

For example, in Example 1, it is assumed that the first information indicates that the relative location of the slot in which the $1^{st}$ reference signal burst is located in the corresponding frame is a 1st slot, the interval between two adjacent reference signal bursts is 12 symbols, and the symbol location of the 1st reference signal burst in the slot in which the 1st reference signal burst is located is a 13th symbol in the slot. In this case, a reference signal burst pattern determined by the terminal device based on the first information is shown in FIG. 5. A slot location (namely, a slot 0) of the slot in which the 1st reference signal burst of the secondary cell is located is the 1st slot in the frame in which the 1st reference signal burst is located, and the symbol location of the 1st reference signal burst in the slot in which the 1st reference signal burst is located is the 13th symbol in the slot.

In Example 2, the communication protocol predefines that a 1st reference signal of the secondary cell is sent in a 1st slot in the corresponding frame. It is assumed that the first information indicates that the interval between two adjacent reference signal bursts is four symbols. In this case, a reference signal burst pattern (pattern) determined by the terminal device based on the first information is shown in FIG. 6. A slot (namely, a slot 0) in which the 1st reference signal burst of the secondary cell is located is the 1st slot in the frame in which the 1st reference signal burst is located, and the symbol location of the 1st reference signal burst in the slot in which the 1st reference signal burst is located is a 5th symbol in the slot (which may be understood as that an interval between the symbol location and the start moment of the slot is four symbols).

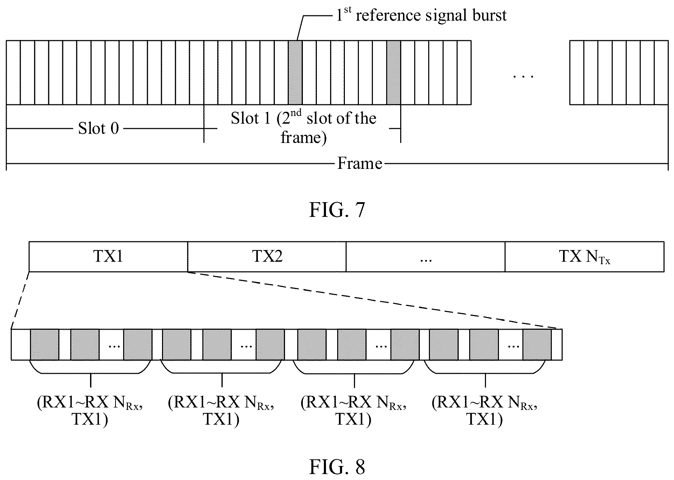

In Example 3, the communication protocol predefines that the 1st reference signal burst of the secondary cell is sent in a 2nd slot in the corresponding frame. It is assumed that the first information indicates that the interval between two adjacent reference signal bursts is six symbols, and the symbol location of the 1st reference signal burst in the slot in which the 1st reference signal burst is located is a 7th symbol in the slot. In this case, a reference signal burst pattern determined by the terminal device based on the first information is shown in FIG. 7. A slot location (namely, a slot 1) of the slot in which the 1st reference signal burst of the secondary cell is located is the 2nd slot in the frame in which the 1st reference signal burst is located, and the symbol location of the 1st reference signal burst in the slot in which the 1st reference signal burst is located is the 7th symbol in the slot.

S402: The terminal device receives a reference signal burst #i of the secondary cell, where the reference signal burst #i is one of reference signal bursts indicated by the first information.

The terminal device receives a MAC CE that carries the activation command, and determines a reference signal burst pattern of the secondary cell based on the first information, which is alternatively understood as a plurality of reference signal bursts determined based on the first information. Further, the terminal device receives the plurality of reference signal bursts based on the pattern, where the reference signal burst #i is any one of the plurality of reference signal bursts indicated in the pattern.

It should be noted that a quantity of reference signal bursts of the secondary cell (or understood as a quantity of reference signal bursts indicated in the pattern) is related to a quantity of transmit beams corresponding to the secondary cell and/or a quantity of receive beams of the terminal device. For example, the terminal device performs AGC settling twice, cell search once, and L1-RSRP measurement once in each receive beam direction. In this case, a reference signal burst pattern of the secondary cell is shown in FIG. 8, the quantity of reference bursts of the secondary cell is four times a product of the quantity of transmit beams (represented by $N_{Tx}$ below) and the quantity of receive beams (represented by $N_{Rx}$ below). For example, the transmit beam of the secondary cell includes a transmit beam Tx1. The transmit beam Tx1 corresponds to a first part of reference signal bursts, a second part of reference signal bursts, a third part of reference signal bursts, and a fourth part of reference signal bursts in the pattern. A quantity of reference signal bursts included in each part of reference signal bursts is determined based on $N_{Rx}$. Different reference signal bursts in the first part of bursts are used for performing a first time of AGC settling in a transmit beam Tx1 direction in different receive beam directions, different reference signal bursts in the second part of bursts are used for performing a second time of AGC settling in the transmit beam Tx1 direction in different receive beam directions, different reference signal bursts in the third part of bursts are used for performing cell search in the transmit beam Tx1 direction in different receive beam directions, and different reference signal bursts in the fourth part of bursts are used for performing L1-RSRP measurement in the transmit beam Tx1 direction in different receive beam directions.

It may be understood that, when the network device sends, to the terminal device, the reference signal burst indicated by the first information, a resource conflict may occur between the reference signal burst and a channel or a signal of another terminal device. The following uses an example in which a resource conflict occurs between a reference signal burst #j (which is one of the reference signal bursts indicated by the first information) and a channel or a signal of another terminal device, to describe a solution provided in this application to avoid a resource conflict on a resource of a reference signal burst.

In a possible implementation, when a time-frequency resource of a PDCCH and a time-frequency resource of the reference signal burst #j overlap on a first symbol, the terminal device does not expect to receive the reference signal burst #j on the first symbol. In other words, when a priority of the PDCCH is higher than a priority of the reference signal burst, the network device sends the PDCCH on the first symbol, and does not send the reference signal burst #j on the first symbol, that is, puncturing is performed on the first symbol in the pattern.

Alternatively, in a possible implementation, when a time-frequency resource of a physical downlink shared channel (physical downlink shared channel, PDSCH) and the time-frequency resource of the reference signal burst #*j* overlap on a second symbol, the terminal device receives the reference signal burst #*j* on the second symbol. In other words, when the priority of the reference signal burst is higher than a priority of the PDSCH, the network device sends the reference signal burst #*j* on the second symbol, and does not send the PDSCH on the second symbol.

Alternatively, in a possible implementation, when a time-frequency resource of a first reference signal and the time-frequency resource of the reference signal burst #*j* overlap on a third symbol, the terminal device receives the reference signal burst #*j* on the third symbol, where the first reference signal is a CSI-RS or a demodulation reference signal (demodulation reference signal, DMRS). In other words, when the priority of the reference signal burst is higher than a priority of the first signal, the network device sends the reference signal burst #*j* on the third symbol, and does not send the first reference signal on the third symbol.

S403: The terminal device determines an index value of the reference signal burst #i based on a receive time of the reference signal burst #i and the interval between two adjacent reference signal bursts.

In other words, the terminal device determines a number of the reference signal burst #*i* based on the receive time of the reference signal burst #*i* and the interval between two adjacent reference signal bursts, which is alternatively understood as determining that the reference signal burst #i is a specific reference signal burst in the frame.

In a possible implementation, the terminal device determines a plurality of time ranges based on the SCS of the secondary cell, the receive time difference between the primary cell and the secondary cell, and the interval between two adjacent reference signal bursts. Different time ranges in the plurality of time ranges correspond to different index values. Further, the terminal device determines an index value corresponding to a time range #i (that is, a time range in which the receive time of the reference signal burst #i falls in the plurality of time ranges) as the index value of the reference signal burst #i.

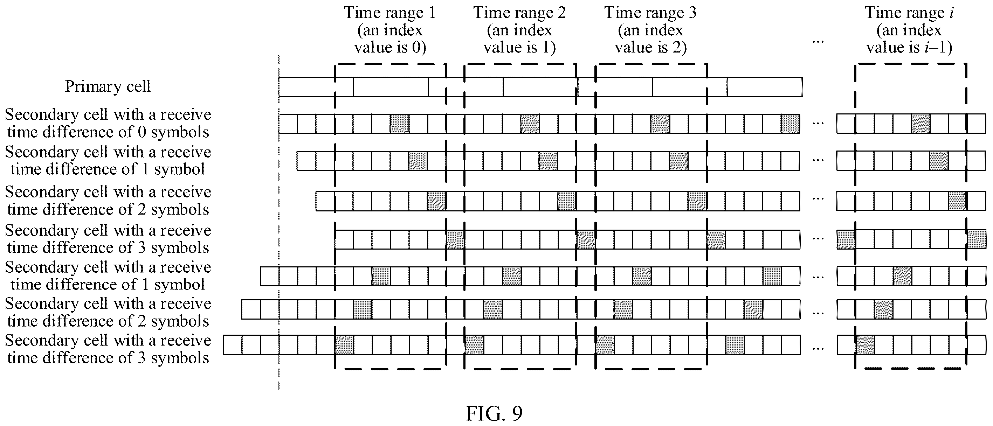

For example, the receive time difference between the primary cell and the secondary cell is 25 $\mu$s, the SCS of the secondary cell is 120 kHz, and the interval between two adjacent reference signal bursts is six symbols. Based on the SCS of the secondary cell, a maximum receive time difference between the primary cell and the secondary cell is calculated to be three symbols. FIG. 9 is a diagram of a correspondence between a time range and an index value according to an embodiment of this application. Each time range includes a receive time of a reference signal burst indicated by an index value corresponding to the time range, which is alternatively understood as that each time range includes an earliest receive time and a latest receive time of the reference signal burst indicated by the index value corresponding to the time range in a case of various receive time differences. Further, the terminal device determines the index value of the reference signal burst #i based on the time range in which the receive time of the reference signal burst #i falls. For example, when the receive time of the reference signal burst #i falls in a time range 1, it is determined that the index value of the reference signal burst #i is 0, that is, the reference signal burst #i is a $1^{st}$ reference signal burst in the frame. When the receive time of the reference signal burst #*i* falls in a time range *i,* it is determined that the index value of the reference signal burst #*i* is i-1, that is, the reference signal burst #i is an $i^{th}$ reference signal burst in the frame.

S404: The terminal device performs cell search based on the index value of the reference signal burst #i, the start location of the $1^{st}$ reference signal burst in the frame in which the $1^{st}$ reference signal burst is located, and the interval between two adjacent reference signal bursts.

The terminal device determines a receive time of the $1^{st}$ reference signal burst based on the index value of the reference signal burst #i and the interval between two adjacent reference signal bursts, and then determines a start boundary (or understood as a start location) of the frame in which the $1^{st}$ reference signal burst is located based on the start location of the $1^{st}$ reference signal burst in the frame, to complete the cell search.

It should be noted that, after receiving a reference signal burst, the terminal device performs an AGC settling process, a cell search process, or an L1-RSRP measurement process in a secondary cell activation process based on the received reference signal burst. The AGC settling process and the L1-RSRP measurement process performed by the terminal device based on the reference signal burst are not specifically limited in this application, but only the cell search process (that is, a frame synchronization process) performed based on the reference signal burst is described in detail.

In conclusion, according to the method shown in FIG. 4, the first information indicates the interval between two adjacent reference signal bursts to affect a reference signal burst periodicity, thereby improving flexibility of the reference signal burst periodicity. Compared with a manner of activating the secondary cell by receiving an SSB at a fixed periodicity, a manner of activating the secondary cell by receiving the reference signal burst at a flexible periodicity helps reduce a delay of activating the secondary cell by the terminal device. In addition, in the solution provided in this application, the terminal device determines the index value of the reference signal burst based on the receive time of the reference signal burst, without adding frame indication information and the index value of the reference signal burst to the reference signal burst. This further helps reduce overheads in comparison with a structure in which the SSB includes a synchronization signal and a channel used to carry frame indication information and an index of the SSB.

It can be understood that, to implement the functions in the foregoing embodiments, the terminal device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by a transceiver unit of computer software depends on particular application scenarios and design constraint conditions of the technical solutions.

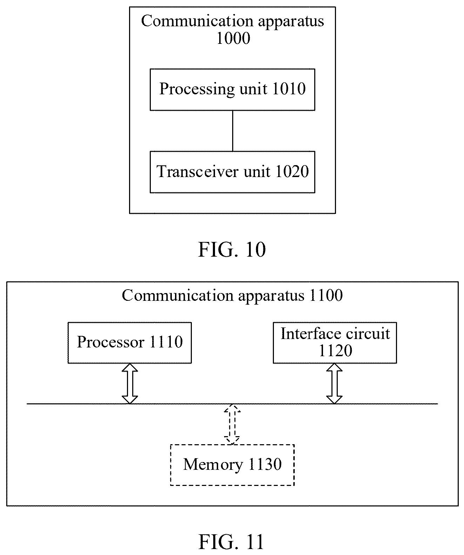

FIG. 10 and FIG. 11 are diagrams of structures of possible communication apparatuses according to embodiments of this application. These communication apparatuses may be configured to implement functions of the terminal device in the foregoing method embodiments, and therefore can also achieve beneficial effects of the foregoing method embodiments. In embodiments of this application, the communication apparatus may be the terminal 120 shown in FIG. 1, or may be a module (for example, a chip) used in the terminal device, or the communication apparatus may be the network device 110 shown in FIG. 1, or may be a module (for example, a chip) used in the network device.

As shown in FIG. 10, the communication apparatus 1000 includes a processing unit 1010 and a transceiver unit 1020. The communication apparatus 1000 is configured to implement the functions of the terminal device in the method embodiment shown in FIG. 4.

When the communication apparatus 1000 is configured to implement the functions of the terminal device in the method embodiment shown in FIG. 4, the transceiver unit 1020 is configured to receive first information from a network device, where the first information indicates a start location of a 1st reference signal burst of a secondary cell in a frame in which the 1st reference signal burst is located and an interval between two adjacent reference signal bursts; the transceiver unit 1020 is further configured to receive a reference signal burst #i of the secondary cell, where the reference signal burst #i is one of reference signal bursts indicated by the first information; the processing unit 1010 is configured to determine an index value of the reference signal burst #i based on a receive time of the reference signal burst #i and the interval between two adjacent reference signal bursts; and the processing unit 1010 is further configured to perform cell search based on the index value of the reference signal burst #i, the start location of the 1st reference signal burst in the frame in which the 1st reference signal burst is located, and the interval between two adjacent reference signal bursts.

In a possible implementation, the processing unit 1010 is further configured to determine a plurality of time ranges based on a subcarrier spacing of the secondary cell, a receive time difference between a primary cell and the secondary cell, and the interval between two adjacent reference signal bursts, where different time ranges in the plurality of time ranges correspond to different index values; and the processing unit 1010 is further configured to determine an index value corresponding to a time range #i as the index value of the reference signal burst #i, where the time range #i is a time range in which the receive time of the reference signal burst #i falls in the plurality of time ranges.

In a possible implementation, the interval between two adjacent reference signal bursts is greater than or equal to $2 \cdot \lceil \Delta T \cdot 14 \cdot 2^{\mu} \cdot 10^{-3} \rceil$, where $\mu$ is an integer greater than or equal to -1, a relationship between $\mu$ and the subcarrier spacing SCS of the secondary cell satisfies SCS = 15kHz $\cdot$ $2^{\mu}$, and $\Delta T$ is the receive time difference between the primary cell and the secondary cell.

In a possible implementation, when a time-frequency resource of a physical downlink control channel PDCCH and a time-frequency resource of a reference signal burst #j overlap on a first symbol, the terminal device does not expect to receive the reference signal burst #j on the first symbol, where the reference signal burst #j is one of the reference signal bursts indicated by the first information; or when a time-frequency resource of a physical downlink shared channel PDSCH and the time-frequency resource of the reference signal burst #j overlap on a second symbol, the transceiver unit 1020 is further configured to receive the reference signal burst #j on the second symbol; or when a time-frequency resource of a first reference signal and the time-frequency resource of the reference signal burst #j overlap on a third symbol, the transceiver unit 1020 is further configured to receive the reference signal burst #j on the third symbol, where the first reference signal is a channel state information reference signal CSI-RS or a demodulation reference signal DMRS.

For more detailed descriptions of the transceiver unit 1020 and the processing unit 1010, refer to the related descriptions of the terminal device in the method embodiment shown in FIG. 4.

As shown in FIG. 10, the communication apparatus 1000 includes a processing unit 1010 and a transceiver unit 1020. The communication apparatus 1000 is configured to implement the functions of the network device in the method embodiment shown in FIG. 4.

When the communication apparatus 1000 is configured to implement the functions of the network device in the method embodiment shown in FIG. 4, the transceiver unit 1020 is configured to send first information to a terminal device, where the first information indicates a start location of a 1st reference signal burst of a secondary cell in a frame in which the 1st reference signal burst is located and an interval between two adjacent reference signal bursts, where the interval between two adjacent reference signal bursts is greater than or equal to $2 \cdot \lceil \Delta T \cdot 14 \cdot 2^{\mu} \cdot 10^{-3} \rceil$, where $\mu$ is an integer greater than or equal to -1, a relationship between $\mu$ and a subcarrier spacing SCS of the secondary cell satisfies SCS = 15kHz $\cdot 2^{\mu}$, and $\Delta T$ is a receive time difference between a primary cell and the secondary cell; and the transceiver unit 1020 is further configured to send a reference signal burst of the secondary cell to the terminal device based on the start location of the 1st reference signal burst in the frame in which the 1st reference signal burst is located and the interval between two adjacent reference signal bursts, where the reference signal burst of the secondary cell includes the 1st reference signal burst.

In a possible implementation, when a time-frequency resource of a physical downlink control channel PDCCH and a time-frequency resource of a reference signal burst #j overlap on a first symbol, the transceiver unit 1020 is further configured to send the PDCCH on the first symbol, and does not send the reference signal burst #j on the first symbol, where the reference signal burst #j is one of reference signal bursts indicated by the first information; or when a time-frequency resource of a physical downlink shared channel PDSCH and the time-frequency resource of the reference signal burst #j overlap on a second symbol, the transceiver unit 1020 is further configured to send the reference signal burst #j on the second signal, and does not send the PDSCH on the second symbol; or when a time-frequency resource of a first reference signal and the time-frequency resource of the reference signal burst #j overlap on a third symbol, the transceiver unit 1020 is further configured to send the reference signal burst #j on the third symbol, and does not send the first reference signal on the third symbol, where the first reference signal is a channel state information reference signal CSI-RS or a demodulation reference signal DMRS.

For more detailed descriptions of the transceiver unit 1020 and the processing unit 1010, refer to the related descriptions of the network device in the method embodiment shown in FIG. 4.

As shown in FIG. 11, the communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions executed by the processor 1110, input data required by the processor 1110 to run the instructions, or data generated after the processor 1110 runs the instructions.

When the communication apparatus 1100 is configured to implement the method shown in FIG. 4, the processor 1110 is configured to implement functions of the processing unit 1010, and the interface circuit 1120 is configured to implement functions of the transceiver unit 1020.

When the communication apparatus is a chip used in a terminal, the chip in the terminal implements functions of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a network device, the chip in the network device implements a function of the network device in the foregoing method embodiments. That the chip in the network device receives information from a terminal may be understood as that the information is first received by another module (for example, a radio frequency module or an antenna) in the network device, and then sent by these modules to the chip in the network device. That the chip in the network device sends information to a terminal may be understood as that the information is first sent to another module (for example, a radio frequency module or an antenna) in the network device, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A secondary cell activation method, applied to a terminal device or a module in the terminal device, comprising:

receiving first information from a network device, wherein the first information indicates a start location of a $1^{st}$ reference signal burst of a secondary cell in a frame in which the $1^{st}$ reference signal burst is located and an interval between two adjacent reference signal bursts;

receiving a reference signal burst #i of the secondary cell, wherein the reference signal burst #i is one of reference signal bursts indicated by the first information;

determining an index value of the reference signal burst #i based on a receive time of the reference signal burst #i and the interval between two adjacent reference signal bursts; and

performing cell search based on the index value of the reference signal burst #i, the start location of the $1^{st}$ reference signal burst in the frame in which the $1^{st}$ reference signal burst is located, and the interval between two adjacent reference signal bursts.

2. The method according to claim 1, wherein the determining of the index value of the reference signal burst #*i* based on the receive time of the reference signal burst #*i* and the interval between two adjacent reference signal bursts comprises:

determining a plurality of time ranges based on a subcarrier spacing of the secondary cell, a receive time difference between a primary cell and the secondary cell, and the interval between two adjacent reference signal bursts, wherein different time ranges in the plurality of time ranges correspond to different index values; and determining an index value corresponding to a time range #i as the index value of the reference signal burst #*i,* wherein the time range #*i* is a time range in which the receive time of the reference signal burst #i falls in the plurality of time ranges.

3. The method according to claim 1 or 2, wherein the interval between two adjacent reference signal bursts is greater than or equal to

$2 \cdot \lceil \Delta T \cdot 14 \cdot 2^{\mu} \cdot 10^{-3} \rceil$ , wherein $\mu$ is an integer greater than or equal to -1, a relationship between $\mu$ and the subcarrier spacing SCS of the secondary cell satisfies SCS = 15kHz $\cdot 2^{\mu}$, and $\Delta T$ is the receive time difference between the primary cell and the secondary cell.

4. The method according to any one of claims 1 to 3, wherein

when a time-frequency resource of a physical downlink control channel PDCCH and a time-frequency resource of a reference signal burst #j overlap on a first symbol, the terminal device does not expect to receive the reference signal burst #j on the first symbol, wherein the reference signal burst #*j* is one of the reference signal bursts indicated by the first information; or when a time-frequency resource of a physical downlink shared channel PDSCH and the time-frequency resource of the reference signal burst #j overlap on a second symbol, receiving the reference signal burst #j on the second symbol; or when a time-frequency resource of a first reference signal and the time-frequency resource of the reference signal burst #j overlap on a third symbol, receiving the reference signal burst #j on the third symbol, wherein the first reference signal is a channel state information reference signal CSI-RS or a demodulation reference signal DMRS.

5. A secondary cell activation method, applied to a network device or a module in the network device, comprising:

sending first information to a terminal device, wherein the first information indicates a start location of a 1st reference signal burst of a secondary cell in a frame in which the 1st reference signal burst is located and an interval between two adjacent reference signal bursts, wherein

the interval between two adjacent reference signal bursts is greater than or equal to

$2 \cdot \lceil \Delta T \cdot 14 \cdot 2^{\mu} \cdot 10^{-3} \rceil$ , wherein $\mu$ is an integer greater than or equal to -1, a relationship between $\mu$ and a subcarrier spacing SCS of the secondary cell satisfies SCS = 15kHz $\cdot 2^{\mu}$, and $\Delta T$ is a receive time difference between a primary cell and the secondary cell; and sending a reference signal burst of the secondary cell to the terminal device based on the start location of the 1st reference signal burst in the frame in which the 1st reference signal burst is located and the interval between two adjacent reference signal bursts, wherein the reference signal burst of the secondary cell comprises the 1st reference signal burst.

6. The method according to claim 5, wherein

when a time-frequency resource of a physical downlink control channel PDCCH and a time-frequency resource of a reference signal burst #j overlap on a first symbol, sending the PDCCH on the first symbol, and not sending the reference signal burst #j on the first symbol, wherein the reference signal burst #j is one of reference signal bursts indicated by the first information; or when a time-frequency resource of a physical downlink shared channel PDSCH and the time-frequency resource of the reference signal burst #j overlap on a second symbol, sending the reference signal burst #j on the second signal, and not sending the PDSCH on the second symbol; or when a time-frequency resource of a first reference signal and the time-frequency resource of the reference signal burst #j overlap on a third symbol, sending the reference signal burst #j on the third symbol, and not sending the first reference signal on the third symbol, wherein the first reference signal is a channel state information reference signal CSI-RS or a demodulation reference signal DMRS.

7. A communication apparatus, comprising a module configured to perform the method according to any one of claims 1 to 4, or a module configured to perform the method according to claim 5 or 6.

8. A communication apparatus, comprising a processor and an interface circuit, wherein

the interface circuit is configured to receive a signal from a communication apparatus other than the communication apparatus and transmit the signal to the processor, or send a signal from the processor to a communication apparatus other than the communication apparatus; and
the processor is configured to implement the method according to any one of claims 1 to 4 or the method according to claim 5 or 6 through a logic circuit or by executing instructions.

9. A computer-readable storage medium comprising a computer program or instructions which, when the computer program or the instructions are executed by a communication apparatus, cause the communication apparatus to implement the method according to any one of claims 1 to 4 or the method according to claim 5 or 6.

10. A computer program product comprising a computer program or instructions which, when the computer program or the instructions are executed by a communication apparatus, cause the communication apparatus to implement the method according to any one of claims 1 to 4 or the method according to claim 5 or 6.

FIG. 1

FIG. 2

FIG. 3

EP 4 746 493 A1

| Network device | | Terminal device |
|---|---|---|

S401: First information indicating a start location of a 1st reference signal burst of a secondary cell in a frame in which the 1st reference signal burst is located and an interval between two adjacent reference signal bursts

S402: Reference signal burst #i of the secondary cell

S403: Determine an index value of the reference signal burst #i based on a receive time of the reference signal burst #i and the interval between two adjacent reference signal bursts

S404: Perform cell search based on the index value of the reference signal burst #i, the start location of the 1st reference signal burst in the frame in which the 1st reference signal burst is located, and the interval between two adjacent reference signal bursts

FIG. 4

1st reference signal burst

| Slot 0 (1st slot of the frame) | Slot 1 |
|---|---|

Frame

FIG. 5

1st reference signal burst

| Slot 0 (1st slot of the frame) | Slot 1 |
|---|---|

Frame

FIG. 6

1st reference signal burst

Slot 0

Slot 1 (2nd slot of the frame)

. . .

Frame

FIG. 7

| TX1 | TX2 | ... | TX $N_{Tx}$ |

...

$(RX1 \sim RX\ N_{Rx},$ TX1)

$(RX1 \sim RX\ N_{Rx},$ TX1)

$(RX1 \sim RX\ N_{Rx},$ TX1)

$(RX1 \sim RX\ N_{Rx},$ TX1)

FIG. 8

EP 4 746 493 A1

FIG. 9

Communication apparatus
1000

Processing unit 1010

Transceiver unit 1020

FIG. 10

Communication apparatus 1100

Processor 1110

Interface circuit
1120

Memory 1130

FIG. 11

## INTERNATIONAL SEARCH REPORT

| International application No. |
| --- |
| **PCT/CN2024/113002** |

| A. | CLASSIFICATION OF SUBJECT MATTER |
| --- | --- |

H04W 24/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CJFD, ENTXTC, ENTXT, VEN, WPABS, 3GPP: 辅小区, 激活, 参考信号, 突发, 起始, 间隔, 时隙, 索引, Scell, secondary cell, activation, reference signal, RS, burst, start, begin, interval, slot, indext

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115190507 A (BEIJING UNISOC COMMUNICATIONS TECHNOLOGY CO., LTD.) 14 October 2022 (2022-10-14) entire document | 1-10 |
| A | CN 116325625 A (QUALCOMM INC.) 23 June 2023 (2023-06-23) entire document | 1-10 |
| A | CN 116391416 A (ZTE CORP.) 04 July 2023 (2023-07-04) entire document | 1-10 |
| A | CN 114208269 A (QUALCOMM INC.) 18 March 2022 (2022-03-18) entire document | 1-10 |
| A | US 2023040353 A1 (APPLE INC.) 09 February 2023 (2023-02-09) entire document | 1-10 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 September 2024** | **19 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/113002**

| Patent document cited in search report | | | Publication date (day/month/year) | Patent family member(s) | | | Publication date (day/month/year) |
|---|---|---|---|---|---|---|---|
| CN | 115190507 | A | 14 October 2022 | None | | | |
| CN | 116325625 | A | 23 June 2023 | US | 2022116924 | A1 | 14 April 2022 |
| | | | | US | 11985648 | B2 | 14 May 2024 |
| | | | | WO | 2022076257 | A1 | 14 April 2022 |
| | | | | EP | 4226518 | A1 | 16 August 2023 |
| CN | 116391416 | A | 04 July 2023 | None | | | |
| CN | 114208269 | A | 18 March 2022 | WO | 2021030015 | A1 | 18 February 2021 |
| | | | | EP | 4011126 | A1 | 15 June 2022 |
| | | | | EP | 4011126 | B1 | 26 June 2024 |
| | | | | US | 2023396377 | A1 | 07 December 2023 |
| | | | | US | 12068980 | B2 | 20 August 2024 |
| | | | | KR | 20220045149 | A | 12 April 2022 |
| | | | | US | 2021044397 | A1 | 11 February 2021 |
| | | | | US | 11463208 | B2 | 04 October 2022 |
| | | | | US | 2022407642 | A1 | 22 December 2022 |
| | | | | US | 11736244 | B2 | 22 August 2023 |
| | | | | BR | 112022001930 | A2 | 03 May 2022 |
| US | 2023040353 | A1 | 09 February 2023 | None | | | |

Form PCT/ISA/210 (patent family annex) (July 2022)

**REFERENCES CITED IN THE DESCRIPTION**

**Patent documents cited in the description**

- CN 202311086713X